# EUROPÄISCHE PATENTSCHRIFT

(11) **EP 1 321 110 B1**
(45) Veröffentlichungstag und Bekanntmachung des Hinweises auf die Patenterteilung: **21.06.2006**
(21) Anmeldenummer: 02023040.5
(22) Anmeldetag: 16.10.2002
(51) Int. Cl.: A61C 19/00

(54) **Ferngesteuertes Bestrahlungsgerät**
Remotely controlled irradiation apparatus
Dispositif d'irradiation télécommandé

(30) Priorität: 18.12.2001 DE 10162231
(43) Veröffentlichungstag der Anmeldung: 25.06.2003
(73) Patentinhaber: Firma Ivoclar Vivadent AG, 9494 Schaan (LI)
(72) Erfinder: Plank, Wolfgang, 6830 Rankweil (AT); Stahl, Thomas, 6900 Bregenz (AT)
(74) Vertreter: Baronetzky, Klaus

(56) Entgegenhaltungen:
- WO-A-01/60280
- US-A- 5 975 895

## Beschreibung

Die Erfindung betrifft ein Dentalgerät gemäß dem Oberbegriff von Anspruch 1.

Unter einem Dentalgerät zum Aushärten von Zahnrestaurationen seien hier dentale Lichthärtgeräte, andere Polymerisationsgeräte, sowie dentale Brennöfen zu verstehen, wobei der Begriff aushärten auch das Brennen von Keramik umfassen soll. Im folgenden wird die Erfindung anhand eines Lichthärtgerätes beschrieben.

Ein derartiges Dentalgerät, nämlich ein Lichthärtgerät, ist in der deutschen Patentanmeldung 101 04 579.4 vorgeschlagen worden. Gemäß dieser Patentanmeldung ist es vorgesehen, das Lichthärtgerät für die Härtung von Dentalmaterialien wie licht- oder wärmepolysierbaren Kunststoffen auszubilden, wobei die Frequenz und das Emissionsspektrum der emittierten Strahlung, aber auch die Strahlungsdauer und die Intensität in weiten Bereichen an die Erfordernisse anpassbar ist.

Für die Bereitstellung verbesserter Dentalrestaurationsergebnisse werden kontinuierlich neue polymierisierbare Massen entwickelt. Ein den Fortschritten angemessenes Ergebnis lässt sich jedoch nur dann erzielen, wenn der Polymerisationszyklus, also die Parameter, mit welchen die Polymerisation durchgeführt wird, dem verwendeten Material angepasst ist.

Wenn ein Hersteller ein neues Material entwickelt, mussten bei den bisherigen, nicht programmierbaren Lichthärtgeräten herstellerseitig entsprechende Anpassungen vorgenommen werden, um das neue Material optimal programmieren zu können. In der vorstehenden Patentanmeldung ist ein Lichthärtgerät vorgeschlagen, das hinsichtlich der Parameter des Polymerisationszyklus programmiert ist, was insofern einen Fortschritt darstellt. Hierzu ist es vorgeschlagen worden, die Programmierung über einen speziellen Programmiermodus vorzunehmen, der bevorzugt mit einem Kennwort gesichert ist. Der Bediener erhält dann ein Kennwort und genaue Anweisungen für die Durchführung der Programmierung. Dieses Verfahren ist allerdings relativ störanfällig, denn wenn versehentlich die Programmierung fehlerhaft durchgeführt wird, entstehen falsche Vorgaben für die Durchführung des Polymerisationszyklus, so dass die vollständige Aushärtung der Dentalmassen gefährdet ist.

Es ist vorgeschlagen worden, bei einem Polymerisationsgerät eine Datenverbindung über Kabel mit einem PC herzustellen, der die Daten beispielsweise über das Internet bezieht und dem Lichthärtgerät zuleitet. Diese Lösung ist jedoch in der Handhabung problematisch und erfordert einen besonderen Aufwand, insbesondere auch Verkabelungsaufwand. Andererseits ist es nachteilig, wenn zusätzliche Steckverbindungen, insbesondere Mehrfachsteckverbindungen mit zahlreichen verbindungsstiften, an dem Lichthärtgerät vorgesehen sind, allein schon, nachdem die Reinigung dann nicht mehr den Sterilitätsanforderungen genügt.

Ferner ist aus der DE-A1-196 18 542 eine Programmiereinrichtung für die Steuereinrichtung eines Lichthärtgeräts bekannt. Diese Programmiereinrichtung erlaubt die Steuerung von Zeitabschnitten für die Einschaltung einer Lichtquelle und einer Wärmequelle, wobei es sich versteht, dass die zeitliche Steuerung von der Art des zu polymerisierende Werkstücks abhängig gemacht werden kann.

Das dokument WO 01/60280 offenbart ein Polymerisationsgerät nach dem Oberbegriff des Anspruchs 1.

Demgegenüber liegt der Erfindung die Aufgabe zu Grunde, ein Dentalgerät gemäß dem Oberbegriff von Anspruch 1 zu schaffen, das flexibler handhabbar und zukunftssicher aufgebaut ist, ohne die Sicherheit des Betriebs zu gefährden.

Diese Aufgabe wird erfindungsgemäß durch Anspruch 1 gelöst. Vorteilhafte Weiterbildungen ergeben sich aus den Unteransprüche.

Die erfindungsgemäße Lösung erlaubt es, die Steuervorrichtung auch aus der Ferne an neue Materialien anzupassen. Auch lassen sich beispielsweise die Programmparameter ändern, wenn im Nachhinein festgestellt wird, dass beispielsweise eine längere oder kürzere Aushärtdauer in einem bestimmten Programmabschnitt günstiger wäre, oder wenn die abgegebene Strahlungsintensität mit einem anderen Verlauf ein günstigeres Aushärtergebnis zeigt. Es lassen sich also Programme neu einstellen oder ändern, man kann Kalibrierungen der Geräte vornehmen und Diagnose-, Wartungs- oder Qualitätssicherungsarbeiten ausführen. Ferner kann das Dentalgerät auch kabellos über einen Akku betrieben werden.

Erfindungsgemäß ist günstigerweise eine Kommunikations-Einheit vorgesehen, die mit der Steuervorrichtung verbunden ist und über welche die Programmierung der Steuervorrichtung geändert werden kann. Die Kommunikations-Einheit kann in beliebiger geeigneter Weise ausgestaltet sein. Als Kommunikationsgerät eignet sich beispielsweise ein drahtloses Telefon nach dem GSM-Standard, das über eine Infrarot-Schnittstelle verfügt. Hierdurch lässt sich auch auf einfache Weise eine Fernprogrammierung realisieren. Bei dieser Lösung ist es dann nicht mehr erforderlich, dass der Zahnarzt selbst beispielsweise am PC tätig wird, so dass Bedienungsfehler insofern weitgehend ausgeschaltet sind.

Es versteht sich, dass auch eine Kommunikation über Funk oder Ultraschall möglich ist bzw. auch über einen PC mit entsprechender Ausrüstung für die kabellose Datenübertragung. Die erfindungsgemäße Kommunikations-Einheit weist mindestens Empfangseigenschaften auf, so dass Daten der programmierbaren Steuereinrichtung zugeleitet werden können, und bevorzugt auch Sendeeigenschaften, so dass eine bidirektionale Kommunikation möglich ist. Bei der bidirektionalen Ausgestaltung der Kommunikations-Einheit lässt sich auch eine automatische Fernkalibrierung realisieren. Wenn das Lichthärtgerät beispielsweise eine Glühlampe wie eine Halogenglühlampe als Lichtquelle aufweist, ist ein regelmäßiger Austausch erforderlich. Glühlampen entsprechen einander in ihrer Strahlungsintensität und ihrem Strahlungsspektrum nur im Wesentlichen. Eine Fernkalibrierung ist beispielsweise dadurch möglich, dass das von der neuen Halogen-Glühlampe emittierte Licht einem geeigneten Lichtsensor zugeleitet wird, der mit der Kommunikations-Einheit in Verbindung steht. Über die Fernkalibrierung kann beispielsweise auch ein Warnsignal abgegeben werden, wenn die verwendete Austausch-Halogenglühlampe nicht dem Anforderungsprofil entspricht.

Es versteht sich, dass die Kommunikations-Einheit in beliebiger geeineter Weise angeordnet sein kann. Wenn eine Halbleiter-Strahlungsquelle verwendet wird, können geeignete Infrarot-Sendedioden und im Infrarotbereich empfindliche Photodioden auf einem gemeinsamen Basiskörper beispielsweise mit LED-Chips vorgesehen sein, so dass die Herstellung vereinfacht ist.

Wenn der Lichtleitstab ein sogenanntes Kantenfilter aufweist, ein Filter also, mit dem die Wärmestrahlung zurückgehalten wird, ist es möglich, den Infrarotdioden benachbart ein Rotfenster vorzusehen.

Andererseits versteht es sich, dass bei Funkübertragung auch eine Kommunikations-Einheit im Handgriff des Handstücks realisiert werden kann.

Weitere Vorteile, Einzelheiten und Merkmale ergeben sich aus der nachstehenden Beschreibung eines Ausführungsbeispiels anhand der Zeichnung.

Es zeigen:
- Fig. 1: eine schematische Ansicht eines erfindungsgemäßen Lichthärtgeräts im Betrieb zur Fernprogrammierung; und
- Fig. 2: eine vergrößerte Ansicht eines Basiskörpers für ein erfindungsgemäßes Lichthärtgerät.

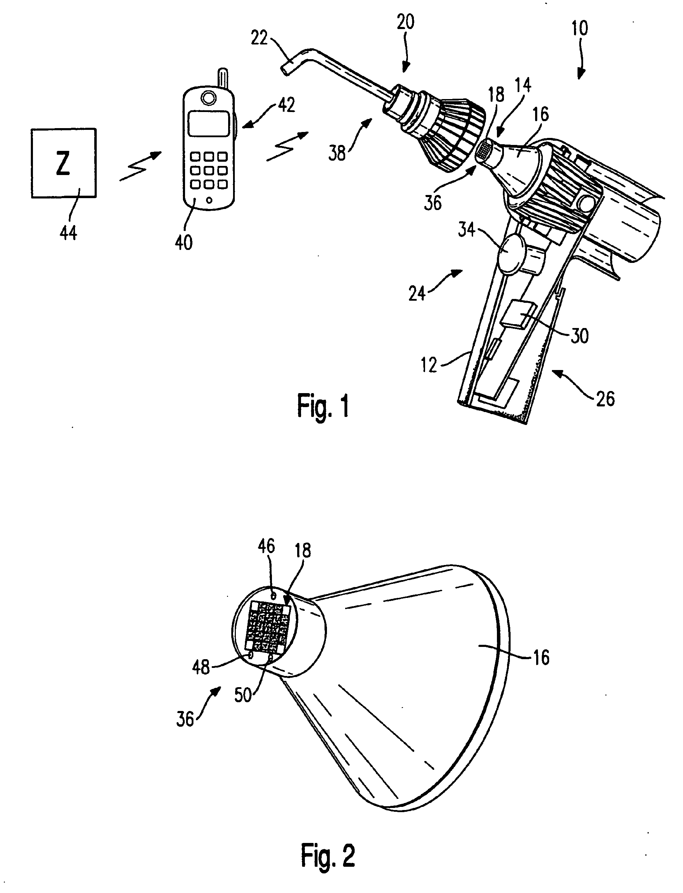

Fig. 1 zeigt eine schematische Ansicht eines erfindungsgemäßen Lichthärtgeräts 10. Das Lichthärtgerät weist in an sich bekannter Weise ein Gehäuse 12 auf, das in Fig. 1 der Deutlichkeit halber so dargestellt ist, dass die eine Halbschale entfernt ist. Das Gehäuse 12 weist die bewährte Pistolenform auf. Eine Lichtquelle 14 ist als Halbleiter-Strahlungsquelle mit einer Mehrzahl von auf einen gemeinsamen Basiskörper 16 angebrachten und gekühlten LED-Chips 18 ausgebildet. Ein vorderer Teil 20 des Lichthärtgeräts 10 ist in Fig. 1 abgenommen dargestellt, um den Blick auf die Lichtquelle 14 freizugeben. Es versteht sich, dass dieser Teil in der Praxis fest mit dem weiteren Teil des Lichthärtgeräts 10 verbunden ist.

Der vordere Teil 20 nimmt geeignete optische Vorrichtungen wie eine Fokussiervorrichtung auf, die die von der Lichtquelle 14 abgegebene Strahlung einem Lichtleitstab 22 zuleitet.

Das Lichthärtgerät 10 weist abgesehen von dem in Fig. 1 dargestellten Handstück 24 eine Basisstation auf, die in Fig. 1 nicht dargestellt ist. In einer ersten Ausführungsform ist das Handstück 24 mit einem Satz von Akkumulatoren im Handgriff 26 versehen, und die Basisstation dient dem Aufladen der Akkumulatoren beim Einstecken des Handgriffs 26 in einen geeignet ausgebildeten Schacht.

In einer zweiten Ausführungsform erstreckt sich ein Speisekabel zwischen der Basisstation und dem Handstück, über welches die elektrische Energie für den Betrieb des Handstücks dem Handstück zuleitbar ist.

Der Handgriff 26 weist ferner eine Steuervorrichtung 30 auf, die aus Fig. 1 schematisch ersichtlich ist. Die Steuervorrichtung 30 ist programmierbar und stellt sicher, dass beim Druck auf einen Auslöseknopf 34 ein Programm abläuft, das die Intensität und Zeitdauer der Einschaltung der LED-Chips 18 in geeigneter Weise steuert. Beispielsweise können auch LED-Chips mit unterschiedlichen spektralen Emissionsmaxima kombiniert werden, die in Gruppen zusammengeschaltet und von der Steuervorrichtung 30 getrennt ansteuerbar sind.

In dem dargestellten Ausführungsbeispiel eines erfindungsgemäßen Lichthärtgeräts 10 trägt der Basiskörper 16 auch die Kommunikations-Einheit 36. Hierzu sind zwei Dioden, nämlich eine Infrarot-Sendediode und eine Infrarot-Empfangsdiode den LED-Chips 18 benachbart auf dem Basiskörper 16 platziert. Vor diesen beiden Dioden weist der vordere Teil 20 ein Rotfenster 38 auf, das in dem dargestellten Ausführungsbeispiel dem Lichtleitstab 22 benachbart knapp neben dessen Ansatz ausgebildet ist. Die Sendeleistung der Infrarotdiode ist für eine Datenübertragung über mehrere Meter ausreichend. Ein in ähnlicher Weise, also ebenfalls mit einer Infrarot-Sendediode und einer Infrarot-Empfangdiode ausgestattetes drahtloses Telefon 40 nach dem GSM- oder dem UMTS-Standard ist in der Lage, mit dem Handstück 24 des Lichthärtgeräts 10 über dessen Kommunikations-Einheit 36 zu kommunizieren. Die Infrarot-Schnittstelle 42 des drahtlosen Telefons oder Handys wird hierzu bevorzugt dem Lichthärtgerät 10 zugewandt, ähnlich wie beispielsweise bei der Fernsteuerung eines Fernsehers über eine Infrarot-Fernbedienung.

Über Funk lässt sich eine Verbindung zu einer Zentrale 44 aufbauen, die herstellerseitig vorgesehen ist und die bidirektionale Datenkommunikation zwischen dem Hersteller und dem Lichthärtgerät zur Programmierung der Steuervorrichtung 30 erlaubt.

Aus Fig. 2 ist der Basiskörper 16 in vergrößerter Darstellung ersichtlich. Neben den LED-Chips 18 ist auf dem Basiskörper 16 ein Temperatursensor 46 vorgesehen. Ferner sind dem Temperatursensor 46 gegenüberliegend und einander benachbart eine Infrarot-Sendediode 48 und ein Infrarot-Empfangsdiode 50 vorgesehen, die gemeinsam die Kommunikations-Einheit 36 bilden. Der Basiskörper 16 ist als Kühlkörper ausgebildet, so dass die Verlustwärme der Infrarot-Sendediode 48 auch abführbar ist. Bevorzugt erfolgt die Datenübermittlung codiert und gepulst, um die Störempfindlichkeit zu reduzieren. Ferner ist es bevorzugt, dass ein an sich bekannter Datenübertragungs-Standard verwendet wird, so dass eine Standard-Infrarotschnittstelle eines Handys verwendet werden kann. Die Programmierung an sich erfolgt allerdings bevorzugt über eine spezielle Codierung und unter Verwendung mindestens einer Prüfsumme, um eine Fehlprogrammierung sicher zu verhindern.

Die hier dargestellte Ausführungform weist als Lichtquelle 14 eine Halbleiter-Strahlungsquelle auf. Typischerweise hat eine derartige Strahlungsquelle einen recht geringen Wärmestrahlungs-Anteil, der zudem durch die Kühlung noch etwas reduziert werden kann. Bei einer derartigen Lösung ist daher die Abschirmung der Wärmestrahlung über Filter im Grunde nicht erforderlich. Daher erlaubt diese Lösung auch die Datenkommunikation über den Lichtleitstab direkt, so dass es auch möglich ist, das Rotfenster 38 entfallen zu lassen und das vordere Ende des Lichtleitstabs 22 der Infrarot-Schnittstelle 42 des Telefons 40 zuzuwenden, um die Datenübertragung zu ermöglichen.

Gemäß einer besonders bevorzugten Ausgestaltung ist es vorgesehen, die Infrarot-Sendedioden und Infrarot-Empfangsdioden 48 und 50 unmittelbar in den Kanälen zwischen den Kühlrippen aufzunehmen. Dies ermöglicht eine ausgesprochen einfache Montage, ohne dass der Luftstrom durch die Kühlrippen und damit die Kühlwirkung nennenswerte beeinträchtigt würde.

Die Ausgestaltung mit Rotfenster 38 ist jedoch bevorzugt, wenn eine Halogen-Glühlampe als Strahlungsquelle eingesetzt ist, die einen vergleichsweise höheren Wärmestrahlungsanteil aufweist, so dass häufig ein Kantenfilter eingesetzt wird. Die Ausgestaltung mit Rotfenster hat zudem den Vorteil, dass Fehllicht verbessert abgehalten wird und dass die Kommunikations-Einheit eine genaue Ausrichtung zwischen Lichthärtgerät und Telefon entbehrlich macht.

## Patentansprüche

1. Dentalgerät zum Aushärten von Zahnrestaurationen, insbesondere Lichthärtgerät, mit einer Steuervorrichtung (30), welche mit einer drahtlosen Kommunikations-Einheit (36) ansteuerbar ist, über die der Steuervorrichtung (30) Daten zu- und/oder abführbar sind, wobei eine Lichtquelle (14) zum Einleiten eines Polymerisationszyklus vorgesehen ist,
**dadurch gekennzeichnet, dass** das Dentalgerät einen Basiskörper (16) aufweist, auf welchem die Kommunikations-Einheit (36) und die Lichtquelle (14) direkt benachbart angeordnet sind.

2. Dentalgerät nach Anspruch 1,
**dadurch gekennzeichnet, dass** die Steuervorrichtung (30), insbesondere für die Realisierung des Polymerisationszyklus, programmierbar und mit der Kommunikations-Einheit (36), über welche der Steuervorrichtung (30) Daten zur Änderung der Programmierung der Steuervorrichtung zuleitbar sind, verbunden ist.

3. Dentalgerät nach Anspruch 1 oder 2,
**dadurch gekennzeichnet, dass** die Steuervorrichtung (30) bei der Übermittlung von Programmierdaten über die Kommunikations-Einheit (36) automatisch umprogrammierbar und/oder das Dentalgerät kalibrierbar ist.

4. Dentalgerät nach einem der vorhergehenden Ansprüche,
**dadurch gekennzeichnet, dass** die Kommunikations-Einheit (36) derart ausgebildet ist, dass das Dentalgerät (10) in drahtlose Verbindung mit einem Steuergerät (40), welches als Datenstation oder als Telefon nach dem GSM- oder UMTS-Standard ausgebildet ist, bringbar ist.

5. Dentalgerät nach einem der vorhergehenden Ansprüche,
**dadurch gekennzeichnet, dass** das Dentalgerät (10) eine Infrarotschnittstelle, eine Funkschnittstelle oder eine Ultraschallschnittstelle aufweist, die als Kommunikations-Einheit (36) mit der Steuervorrichtung (30) verbunden ist.

6. Dentalgerät nach einem der vorhergehenden Ansprüche,
**dadurch gekennzeichnet, dass** die Lichtquelle (14) eine Mehrzahl von LEDs oder Laserdioden aufweist, die im Wesentlichen nebeneinander angeordnet sind.

7. Dentalgerät nach einem der vorhergehenden Ansprüche,
**dadurch gekennzeichnet, dass** die Kommunikations-Einheit (36) mindestens eine Infrarotdiode aufweist, wobei die Übermittlung von Daten durch einen Lichtleitstab (22) verläuft, durch welchen auch die Strahlung für den Polymerisationszyklus hindurchtritt.

8. Dentalgerät nach einem der Ansprüche 1 bis 6,
**dadurch gekennzeichnet, dass** die Kommunikations-Einheit (36) mindestens eine Infrarotdiode aufweist, wobei die Übermittlung von Daten durch eine separate Lichtdurchtrittsöffnung, insbesondere durch ein Rotfenster (38), im Gehäuse (12) des Dentalgeräts verläuft.

9. Dentalgerät nach einem der vorhergehenden Ansprüche,
**dadurch gekennzeichnet, dass** die Kommunikations-Einheit (36) eine Infrarot-Empfangsdiode (50) und/oder eine Infrarot-Sendediode (48) aufweist, wobei die Infrarotdioden (48, 50) auf dem Basiskörper (16) vorzugsweise aufgeklebt sind.

10. Dentalgerät nach einem der vorhergehenden Ansprüche,
**dadurch gekennzeichnet, dass** der Basiskörper (16) als Kühlkörper ausgebildet ist.

11. Dentalgerät nach einem der vorhergehenden Ansprüche,
**dadurch gekennzeichnet, dass** der Kühlkörper Kühlrippen aufweist, wobei die Infrarot-Empfangsdiode (50) und/oder die Infrarot-Sendediode (48) in den Kanälen zwischen den Kühlrippen angebracht sind.

12. Dentalgerät nach einem der vorhergehenden Ansprüche,
**dadurch gekennzeichnet, dass** es als Lichthärtgerät ausgebildet ist und ein Handstück (24) und insbesondere eine Basisstation aufweist.

13. Dentalgerät nach Anspruch 12,
**dadurch gekennzeichnet, dass** die programmierbare Steuervorrichtung (30) im Handstück (24) integriert ist.

14. Dentalgerät nach Anspruch 12,
**dadurch gekennzeichnet, dass** die programmierbare Steuervorrichtung (30) mindestens teilweise in der Basisstation integriert ist.

15. Dentalgerät nach einem der Ansprüche 12, 13 oder 14,
**dadurch gekennzeichnet, dass** die Kommunikations-Einheit (36) in einem Handstück (24) integriert ist, wobei die Kommunikations-Einheit (36) eine Infrarot-Photodiode als Empfangsvorrichtung und/oder eine Infrarotlicht emittierende Diode als Sendevorrichtung im Handstück (24) angeordnet sind.

## Claims

1. A dental apparatus for curing dental restorations, in particular a light-curing apparatus, having a control device (30) which can be activated by a wireless communications unit (36) via which data can be fed to and/or emitted from the control device (30), wherein a light source (14) is provided for initiating a polymerisation cycle, **characterised in that** the dental apparatus has a base member (16) on which the communications unit (36) and the light source (14) are mounted immediately adjacent thereto.

2. A dental apparatus according to Claim 1, **characterised in that** the control device (30) is programmable, in particular for carrying out the polymerisation cycle, and is connected to the communications unit (36) via which data can be supplied to the control device (30) to change the programming of the control device.

3. A dental apparatus according to Claim 1 or 2, **characterised in that** during the transmission of programming data via the communications unit (36) the control device (30) can be automatically unprogrammed and/or the dental apparatus can be calibrated.

4. A dental apparatus according to any one of the preceding Claims, **characterised in that** the communications unit (36) is so designed that the dental apparatus (10) can be brought into wireless connection with a control unit (40) which is in the form of a data station or telephone conforming to the GSM or UMTS standard.

5. A dental apparatus according to any one of the preceding claims, **characterised in that** the dental apparatus (10) has an infrared interface, a radio interface or an ultra-sound interface which is connected as a communications unit (36) to the control device (30).

6. A dental apparatus according to any one of the preceding claims, **characterised in that** the light source has a plurality of LEDs or laser diodes which are arranged substantially side by side.

7. A dental apparatus according to any one of the preceding Claims, **characterised in that** the communications unit (36) has at least one infrared diode, wherein the transmission of data passes through a light guide rod (22) through which the radiation for the polymerisation cycle also passes.

8. A dental apparatus according to any one of Claims 1 to 6, **characterised in that** the communications unit (36) has at least one infrared diode, wherein the transmission of data passes through a separate light passage opening, in particular through a red window (38), in the housing (12) of the dental apparatus.

9. A dental apparatus according to any one of the preceding Claims, **characterised in that** the communications unit (36) has at least one infrared receiving diode (50) and/or an infrared emitting diode (48), wherein the infrared diodes (48,50) are preferably adhered to the base member (16).

10. A dental apparatus according to any one of the preceding Claims, **characterised in that** the base member (16) is in the form of a cooling member.

11. A dental apparatus according to any one of preceding Claims, **characterised in that** the cooling member has cooling fins, wherein the infrared receiving diode (50) and/or the infrared emitting diode (48) are mounted in the channels between the cooling ribs.

12. A dental apparatus according to any one of the preceding Claims, **characterised in that** it is in the form of a light-curing apparatus and has a hand-operated device (24) and in particular a base station.

13. A dental apparatus according to Claim 12, **characterised in that** the programmable dental apparatus is integrated into the hand-operated device (24).

14. A dental apparatus according to Claims 12, **characterised in that** the programmable control device (30) is integrated at least partly into the base station.

15. A dental apparatus according to any one of Claims 12,13 or 14, **characterised in that** the communications unit (36) is integrated into a hand-operated device (24), wherein the communications unit (36) has [sic] an infrared photodiode as a receiving device and/or a diode emitting infrared light as emitting device, which is/are arranged in the hand-operated device (24).

## Revendications

1. Appareil de technique dentaire pour le durcissement de restaurations dentaires, en particulier appareil à photopolymériser, avec un dispositif de commande (30), lequel est activable par une unité de communication sans fil (36), par l'intermédiaire de laquelle des données peuvent être envoyées au et/ou émises par le dispositif de commande (30), dans lequel une source lumineuse (14) est prévue pour démarrer un cycle de polymérisation,
**caractérisé en ce que** l'appareil de technique dentaire présente un corps de base (16) sur lequel l'unité de communication (36) et la source lumineuse (14) sont disposées directement adjacentes.

2. Appareil de technique dentaire selon la revendication 1,
**caractérisé en ce que** le dispositif de commande (30) est programmable, en particulier pour la réalisation du cycle de polymérisation, et relié à l'unité de communication (36), par l'intermédiaire de laquelle des données peuvent être envoyées au dispositif de commande (30) pour modifier la programmation du dispositif de commande.

3. Appareil de technique dentaire selon la revendication 1 ou 2,
**caractérisé en ce que** le dispositif de commande (30), pour la transmission de données de programmation, peut être reprogrammé automatiquement par l'intermédiaire de l'unité de communication (36) et/ou **en ce que** l'appareil de technique dentaire peut être étalonné.

4. Appareil de technique dentaire selon l'une quelconque des revendications précédentes,
**caractérisé en ce que** l'unité de communication (36) est conçue de telle manière que l'appareil de technique dentaire (10) peut être relié sans fil à un appareil de commande (40), lequel est conçu en tant que station de données ou en tant que téléphone répondant à la norme GSM ou UMTS.

5. Appareil de technique dentaire selon l'une quelconque des revendications précédentes,
**caractérisé en ce que** l'appareil de technique dentaire (10) présente une interface à infrarouge, une interface radio ou une interface à ultrasons, qui est reliée en tant qu'unité de communication (36) au dispositif de commande (30).

6. Appareil de technique dentaire selon l'une quelconque des revendications précédentes,
**caractérisé en ce que** la source lumineuse (14) présente une pluralité de LED ou de diodes laser qui sont disposées essentiellement côte à côte.

7. Appareil de technique dentaire selon l'une quelconque des revendications précédentes,
**caractérisé en ce que** l'unité de communication (36) présente au moins une diode infrarouge, dans lequel la transmission de données se fait par un barreau guide de lumière (22) qui est également traversé par le rayonnement pour le cycle de polymérisation.

8. Appareil de technique dentaire selon l'une quelconque des revendications 1 à 6,
**caractérisé en ce que** l'unité de communication (36) présente au moins une diode infrarouge, dans lequel la transmission de données se fait par une ouverture séparée de pénétration de la lumière, en particulier par une fenêtre rouge (38), dans le boîtier (12) de l'appareil de technique dentaire.

9. Appareil de technique dentaire selon l'une quelconque des revendications précédentes,
**caractérisé en ce que** l'unité de communication (36) présente une diode réceptrice infrarouge (50) et/ou une diode émettrice infrarouge (48), dans lequel les diodes infrarouge (48, 50) sont de préférence collées sur le corps de base (16).

10. Appareil de technique dentaire selon l'une quelconque des revendications précédentes,
**caractérisé en ce que** le corps de base (16) est conçu en tant que dissipateur thermique.

11. Appareil de technique dentaire selon l'une quelconque des revendications précédentes,
**caractérisé en ce que** le dissipateur thermique présente des ailettes de refroidissement, dans lequel la diode réceptrice infrarouge (50) et/ou la diode émettrice infrarouge (48) sont logées dans les canaux situés entre les ailettes de refroidissement.

12. Appareil de technique dentaire selon l'une quelconque des revendications précédentes,
**caractérisé en ce qu'**il est conçu en tant qu'appareil à photopolymériser et **en ce qu'**il présente une poignée (24) et en particulier une station de base.

13. Appareil de technique dentaire selon la revendication 12,
**caractérisé en ce que** le dispositif de commande (30) programmable est intégré dans la poignée (24).

14. Appareil de technique dentaire selon la revendication 12,
**caractérisé en ce que** le dispositif de commande programmable (30) est au moins en partie intégré dans la station de base.

15. Appareil de technique dentaire selon l'une quelconque des revendications 12, 13 ou 14,
**caractérisé en ce que** l'unité de communication (36) est intégrée dans une poignée (24), dans lequel l'unité de communication (36) comprend une photodiode infrarouge en tant que dispositif de réception et/ou une diode émettant une lumière infrarouge en tant que dispositif d'émission logées dans la poignée (24).
